# EUROPÄISCHE PATENTSCHRIFT

(11) **EP 0 475 000 B1**
(45) Veröffentlichungstag und Bekanntmachung des Hinweises auf die Patenterteilung: **02.01.1997**
(21) Anmeldenummer: 91110999.9
(22) Anmeldetag: 03.07.1991
(51) Int. Cl.: E04F 15/18, E04F 13/04, E04G 23/02, C04B 41/52

(54) **Beschichtungssystem**
Coating system
Système de revêtement

(30) Priorität: 25.08.1990 DE 4026943
(43) Veröffentlichungstag der Anmeldung: 18.03.1992
(73) Patentinhaber: VORWERK & CO. INTERHOLDING GmbH, D-42275 Wuppertal (DE)
(72) Erfinder: Frick, Rainer, W-7247 Sulz/Neckar (DE)
(74) Vertreter: Müller, Enno, Dipl.-Ing.

(56) Entgegenhaltungen:
- CH-A- 659 813
- DE-A- 3 838 320
- GB-A- 2 045 109
- CHEMICAL ABSTRACTS, vol. 112, no. 16, 16. April 1990, Columbus, Ohio, US; abstract no. 144623J, I.NIKOLOV: "crack-resistant coatings for steel-reinforced concrete structures"

## Beschreibung

Die Erfindung betrifft ein Beschichtungssystem mit den Merkmalen des Oberbegriffs des Anspruches 1.

Aus der Praxis sind derartige Beschichtungssysteme bekannt, die dazu dienen, Risse in Betonmauerwerk zu überbrücken bzw. zu verhindern, daß sich Risse, die sich im Betonmauerwerk ausbreiten, bis zu der Oberfläche des Beschichtungssystems fortsetzen. Das Beschichtungssystem hat den Zweck, eine glatte rißfreie Oberfläche zu gewährleisten, selbst dann, wenn im darunter befindlichen Beton Risse entstehen. Außerdem soll die Oberfläche des Beschichtungssystems mechanisch gut belastbar sein.

Das bekannte Beschichtungssystem benötigt im allgemeinen eine Haftgrundierung des Betongrundes sowie eine anschließende zusätzliche Glättspachtelung, um Unebenheiten auszugleichen. Auf dem Glättspachtel wird eine Schicht mit einem niedrigen Schermodul, in der Regel zwischen 100 und 2000 N/mm² aufgebracht. Sodann wird auf dieser Lage ein Glasgewebe oder ein Glasvlies auflaminiert. Dieses Glasgewebe oder Glasvlies soll die Zugfähigkeit der Deckschicht erhöhen und bei auftretenden Risse die Zugspannungen auf eine große Fläche verteilen.

Schließlich befindet sich auf dem Glasvlies oder Glasgewebe eine Oberlage aus einem chemisch beständigen Material mit hohem E-Modul, üblicherweise zwischen 3000 und 10000 N/mm².

Schwierig ist es bei diesem Beschichtungssystem, die Schichtstärken der Lage mit dem niedrigen und der Lage mit dem hohen Schermodul aufeinander abzustimmen, um ein optimales Ergebnis zu erhalten. Außerdem ist der Aufbau des Beschichtungssystems wegen der vielen Lagen recht kostenintensiv und optisch schwer zu kontrollieren.

Aus der DE A1 38 38 320 ist ein Beschichtungssystem bekannt, welches zwei einzeln aufgebrachte Lagen eines Mineralfaserstoffes aufweist.

Ausgehend von dem vorbeschriebenen Stand der Technik beschäftigt sich die Erfindung mit der technischen Problematik, ein Beschichtungssystem anzugeben, das beim Auftreten von Rissen in dem beschichteten Untergrund eine größere Sicherheit gegen Durchreißen der Beschichtung erbringt.

Diese technische Problematik ist beim Gegenstand des Anspruches 1 gelöst.

Durch den Mineralfaserstoff, welcher die beiden Lagen verbindende und in den Lagen verankerte Polfäden aufweist, entstehend zwei Flächen, die durch eine Vielzahl von Fäden miteinander verbunden sind. Nach dem Auflaminieren ist die eine Schicht auf der anderen Schicht gleichsam über eine Vielzahl winziger Stützen aufgeständert.

Aufgrund dieses Aufbaus können die beiden Schichten mit einem verhältnismäßig hohen Druck beaufschlagt werden, ohne daß ein Zusammendrücken der Stützen auftritt. Andererseits ist das Material auch in der Lage, Scherkräfte zwischen den beiden Schichten unbeschadet zu überstehen. Risse, die im Betonuntergrund auftreten, werden deswegen von der unteren Schicht des Mineralfaserstoffes aufgenommen und können nicht auf die Oberseite, d.h. die obere Schicht, übertragen werden, weil die beim Riß auftretenden Scherkräfte zufolge der auf Biegung beanspruchten Polfäden nicht auf die obere Schicht übertragen werden.

Schließlich kann sich das Material im nichtausgehärteten Zustand leicht Unebenheiten auf der Betonstruktur anpassen.

Um die Haftung des Beschichtungssystems zu verbessern, ist es vorteilhaft, wenn auf dem mineralischen Untergrund eine Grundierung mit Hilfe eines Zweikomponenten-Epoxidharzes vorgenommen wird. Damit die Grundierung tief genug in den mineralischen Untergrund eindringt, um die Oberfläche hinreichend zu verfestigen, hat die Grundierung vorteilhafterweise eine Viskosität zwischen 30 mPas und 1000 mPas. Wenn die Oberfläche des mineralischen Untergrundes zu starke Unebenheiten bei zu kleiner Grenzwellenlänge aufweist, so daß zu befürchten ist, daß der Mineralfaserstoff nicht vollflächig zur Anlage kommen kann, wird die grundierte Oberfläche zweckmäßigerweise gespachtelt. Der Spachtel ist, um eine gute Haftung auf der Grundierung zu erzielen, erfindungsgemäß ein Zweikomponenten-Epoxidharz, das mit Hilfe von Zuschlagstoffen gefüllt ist. Die Zuschlagstoffe sind bei einer bevorzugten Ausführungsform Quarzsand mit einer Körnung zwischen 0,1 und 0,3 mm.

Die Verbindung des Mineralfaserstoffes mit dem Untergrund erfolgt mit Hilfe eines Laminierharzes, das ein Epoxidharz, in Styrol gelöstes Vinylesterharz oder ein in Styrol gelöstes Polyesterharz ist.

Als Material für den Mineralfaserstoff eignet sich insbesondere Glasfaser, die sich kostengünstig herstellen und verhältnismäßig leicht verarbeiten läßt. Außerdem ist die Glasfaser weitgehend unempfindlich gegen chemische Einflüsse und auch bis zu hohen Temperaturen stabil.

Der Mineralfaserstoff wird bevorzugt von einem textilen Flächengebilde gebildet, das nach Art eines ungeschnittenen Doppelsamt hergestellt ist. Es ist auch möglich, den Mineralfaserstoff als zweiflächiges Raschelplüschgewirk herzustellen.

Um eine geschlossene, hochbelastbare Oberfläche zu erhalten, ist auf die Oberseite des Mineralfaserstoffes durch Auflaminieren ein Belag aufgebracht.

In der einzigen Figur der Zeichnung ist ein stark schematisierter perspektivischer Ausschnitt aus einer Betonfläche gezeigt, auf der das erfindungsgemäße Beschichtungssystem aufgebracht ist.

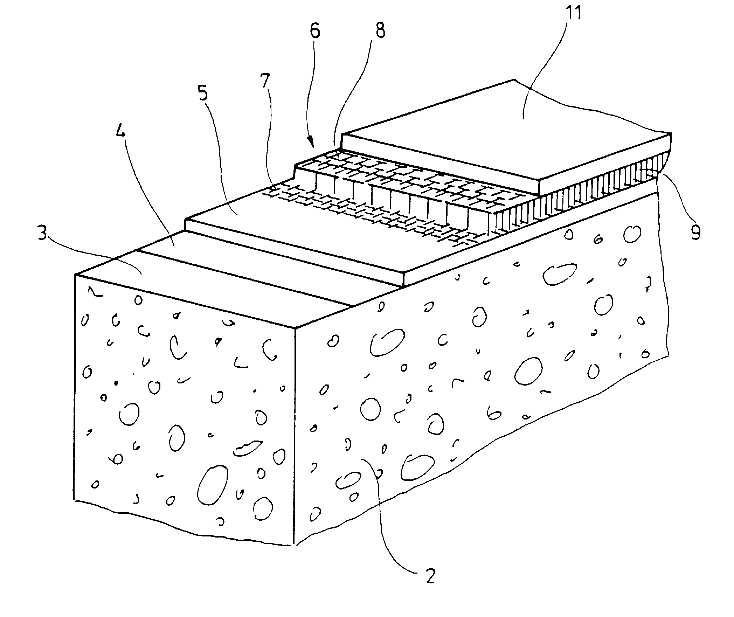

Fig. 1 zeigt ein Betonstück 1, das aus einer Betonwand, einer Betondecke oder einem Betonboden herausgeschnitten ist. Das Betonstück 2 besteht aus mineralischem Beton, bei dem die Zuschlagstoffe durch Zement gebunden sind. Das Betonstück weist eine Oberseite 3 auf, auf die eine Grundierung 4 aufgebracht ist. Die Grundierung 4 besteht aus einem verhältnismäßig dünnflüssigen Epoxidharz und hat die Aufgabe, einerseits die Oberfläche 3 des Betonstücks 2 zu verfestigen und andererseits einen Haftvermittler zu bilden zwischen der Oberseite 3 und einer nachfolgenden Spachtelschicht 5, die die Unebenheiten der Oberseite 3 ausgleichen soll. Die Spachtelschicht 5 besteht ebenfalls aus einem Epoxidharz, das jedoch vorzugsweise mit Quarzsand in der Korngröße zwischen 0,1 und 0,3 mm gefüllt ist. Die Aufgabe der Spachtelschicht besteht darin, die Oberfläche für den nachfolgend aufgebrachten Mineralfaserstoff 6 so weit glätten, daß beim Auflaminieren zwischen dem Betonstück 2 und dem Mineralfaserstoff 6 keine Hohlräume entstehen.

Der Mineralfaserstoff 6 ist ein zweischichtiges, textiles Flächengebilde, das die innere Struktur beispielsweise eines ungeschnittenen Doppelsamt hat. Es besteht aus einer unteren Textillage 7, sowie einer oberen Textillage 8, die miteinander durch eine Vielzahl von Polfäden 9 verbunden sind, die sowohl in der einen als auch in der anderen textilen Schicht 7,8 eingebunden sind. Die Polfäden 9 sind entsprechend der Herstellung voneinander regulär beabstandet und bilden zwischen den beiden Textillagen ein Muster von Reihen, die entsprechend der Herstellung voneinander beabstandet sind, wobei innerhalb jeder Reihe die Polfäden sehr dicht benachbart sind.

Eine Textilware, die diesen Grundaufbau hat, nämlich zwei Textillagen, die durch ihre Polfäden miteinander verbunden sind, läßt sich nicht nur durch Weben herstellen, sondern auch auf einer Raschelmaschine, und wird dann als zweiflächige Raschelplüschware bezeichnet. Sie kommt für das neue Beschichtungssystem ebenso infrage wie eine gewebte textile Ware, weshalb nachfolgend immer nur von Mineralfaserstoff die Rede ist und klar ist, daß darunter jeder Faserstoff verstanden sein soll, der unabhängig von der Herstellung gewebt, gewirkt oder gestrickt, zwei Flächen aufweist, die durch Polfäden miteinander verbunden sind.

Der Mineralfaserstoff 6 ist auf der Spachtelschicht 5 auflaminiert, wobei sich durch das Auflaminieren die Polfäden 9 aufrichten, so daß die beiden Flächen 7 und 8 einen der freien Länge der Polfäden 9 entsprechenden Abstand voneinander bekommen. Gleichzeitig schließen sich durch das Auflaminieren die "Maschen" in den beiden Flächen 7 und 8 des Mineralfaserstoffes 6 weitgehend, während andererseits Hohlräume entstehen, die von den beiden Schichten 7 und 8 sowie den in Reihen angeordneten Polfäden 9 begrenzt sind.

Auf der obersten Fläche 8 des Mineralfaserstoffes 6 ist schließlich ein Belag 10 aufgebracht, der entsprechend gewünschte Eigenschaften hat. Er kann bspw. besonders abriebfest sein, gewisse schwingungsdämpfende Eigenschaften haben, eine hohe Druckfestigkeit aufweisen, oder ähnliche Forderungen erfüllen.

Wenn in dem Betonuntergrund Risse auftreten, erfolgt keine Fortsetzung der Risse in zumindest die oberste Schicht 8 des Mineralfaserstoffes 6, da die Polfäden 9 gewissermaßen die beiden Schichten 7 und 8 des Mineralfaserstoffes 6 hinsichtlich auftretender Scherkräfte voneinander entkoppeln. Auftretende Risse führen in der untersten Schicht 7 des Mineralfaserstoffes 6 zu Zugkräften, was, selbst wenn die unterste Schicht 7 reißt, bestenfalls zum Auftreten von Scherkräften führt, die aber von den Polfäden 9 nicht auf die obere Schicht 8 übertragen werden können. Der aufgebrachte Belag 11 wird in jedem Falle rißfrei sein.

Selbst wenn infolge von auftretenden Rissen der mit Laminatharz getränkte Mineralfaserstoff 6 von der Oberseite 3 des Betons 2 abreißen sollte, bleibt eine gewisse Mindesttragfähigkeit in diesem Bereich übrig, die den Belag 11 bei Belastung unterstützt.

Ein günstiger Kompromiß zwischen Belastbarkeit des Mineralfaserstoffes 6 einerseits und der Fähigkeit, im Beton 2 auftretende Risse zu überbrücken, wird erreicht, wenn der Abstand zwischen den beiden Schichten des Mineralfaserstoffes 6 ca. 2 mm beträgt.

Nachfolgend werden Beispiele des chemischen Aufbaus des Beschichtungssystems gegeben:

### Beispiel 1:

Der vorhandene rauhe Betonuntergrund wird mit einer lösemittelfreien, zweikomponentigen Epoxidhartgrundierung beschichtet, die eine Viskosität von ca. 800 mPas aufweist. Hierdurch wird die Kapillarität des Untergrundes reduziert, die Oberfläche verfestigt und die Haftung für die nachfolgende Grundierspachtelschicht 5 verbessert. Außerdem werden sehr kleine Unebenheiten ausgeglichen.

Die Spachtelschicht 5 besteht aus einem Epoxidharz, das im Gewichtsverhältnis 2:1 mit feuergetrocknetem Quarzsand der Körnung zwischen 0,1 und 0,3 mm gefüllt ist. Die Spachtelschicht 5 wird auf die erhärtete Grundierschicht 4 aufgetragen.

Der Mineralfaserstoff 6 wird mittels eines reaktivverdünnten Epoxidharzes auflaminiert. Das Epoxidharz wird mit Hilfe eines adduktierten Härters vernetzt und hat im ungehärteten Zustand eine Viskosität von ca. 700 mPas.

Den Belag 11 bildet schließlich ein hochchemikalienbeständiger gefüllter Epoxidharzbelag aus Bisphenol A (Warenzeichen) und Epichlorhydrin mit einem mittleren Molekulargewicht von 400. Der Härter ist ein aromatisches Diamin.

Das beschriebene Beschichtungssystem eignet sich sehr gut zur Auskleidung von Auffangwannen für wassergefährdende Flüssigkeiten, weil auch bei Rissen im Betonuntergrund das Beschichtungssystem dicht bleibt.

### Beispiel 2:

Die Grundierschicht 4 und die Spachtelschicht 5 sind wie bei Beispiel 1 aufgebracht.
Zum Auflaminieren des Mineralfaserstoffes 6 wird ein in Styrol gelöstes Vinylester- oder Polyesterharz verwendet. Beispielsweise ein thixotrop eingestelltes, mittelreaktives, ungesättigtes Isophtalsäure-Neopentylglykol-Polyesterharz, das in Styrol gelöst ist. Die Kapillarität bewirkt wiederum, daß sich die Polfäden 9 aufrichten, um die beiden räumlich voneinander getrennten textilen Schichten 7 und 8 entstehen zu lassen.

Die Mischviskosität des vorbeschleunigten und mit Benzoylperoxid gehärteten Laminatharzes beträgt 800 mPas.

Der Belag 11 besteht aus einem mineralisch gefüllten Vinyl- oder Polyesterharz, das als 60%ige Lösung in Styrol mit Diethylanilin vorbeschleunigt vorliegt und mit Benzoylperoxid radikalisch gehärtet wird.

## Patentansprüche

1. Beschichtungssystem für gemauerte oder betonierte Flächen, mit einer unmittelbar auf die Fläche (3) aufgebrachten Grundierung (4), einer auf der Grundierung (4) haftenden Spachtelschicht (5), auf die zwei Lagen eines Mineralfaserstoffes (6), der gewebt, gewirkt oder gestrickt ist, mit Hilfe eines Kunstharzes auflaminiert ist, dadurch gekennzeichnet, daß die zwei Lagen durch Pol- oder Plüschfäden (9) miteinander verbunden sind und daß die Pol- oder Plüschfäden in den beiden Lagen (7, 8) verankert sind.

2. Beschichtungssystem nach Anspruch 1, dadurch gekennzeichnet, daß die Grundierung (4) ein Zweikomponenten-Epoxidharz, vorzugsweise mit einer Viskosität zwischen 300 mPas und 1000 mPas, ist.

3. Beschichtungssystem nach Anspruch 1, dadurch gekennzeichnet, daß die Spachtelschicht (5) aus einem zweikomponentigen Epoxidharz besteht, das mit Hilfe von Zuschlagstoffen, insbesondere mineralischen Zuschlagstoffen, gefüllt ist.

4. Beschichtungssystem nach Anspruch 3, dadurch gekennzeichnet, daß die Zuschlagstoffe Quarzsand mit einer Körnung zwischen 0,1 und 0,3 mm sind.

5. Beschichtungssystem nach Anspruch 1, dadurch gekennzeichnet, daß der Mineralfaserstoff (6) durch ein Laminatharz mit der Spachtelschicht (5) verbunden ist.

6. Beschichtungssystem nach Anspruch 5, dadurch gekennzeichnet, daß das Laminatharz ein Epoxidharz, ein in Styrol gelöstes Vinylesterharz oder in Styrol gelöstes Polyesterharz ist.

7. Beschichtungssystem nach Anspruch 5, dadurch gekennzeichnet, daß das Laminatharz vorbeschleunigt ist.

8. Beschichtungssystem nach Anspruch 1, dadurch gekennzeichnet, daß der Mineralfaserstoff (6) aus Glasfaser besteht.

9. Beschichtungssystem nach Anspruch 1, dadurch gekennzeichnet, daß der Mineralfaserstoff (6) ein Gewebe ist, das ähnlich einem ungeschnittenen Doppelsamt ist.

## Claims

1. Coating system for bricked or concreted surfaces having a primer (4) applied directly to the surface (3), a plaster layer (5) adhering to the primer (4), to which two layers of a mineral fibre material (6), which is woven, warp-knitted or knitted, is laminated with the aid of a plastic resin, characterised in that the two layers are joined to one another by pile or plush threads (9) and in that the pile or plush threads are anchored in the two layers (7, 8).

2. Coating system according to claim 1, characterised in that the primer (4) is a two-component epoxy resin, preferably having a viscosity between 300 mPas and 1,000 mPas.

3. Coating system according to claim 1, characterised in that the plaster layer (5) consists of a two-component epoxy resin which is filled with the aid of additives, particularly mineral additives.

4. Coating system according to claim 3, characterised in that the additives are quartz sand having a grain size between 0.1 and 0.3 mm.

5. Coating system according to claim 1, characterised in that the mineral fibre material (6) is joined to the plaster layer (5) by means of a laminating resin.

6. Coating system according to claim 5, characterised in that the laminating resin is an epoxy resin, a vinylester resin dissolved in styrene or polyester resin dissolved in styrene.

7. Coating system according to claim 5, characterised in that the laminating resin is pre-accelerated.

8. Coating system according to claim 1, characterised in that the mineral fibre material (6) consists of glass fibre.

9. Coating system according to claim 1, characterised in that the mineral fibre material (6) is a fabric which is similar to an uncut double velvet.

## Revendications

1. Système de revêtement pour des surfaces de maçonnerie ou bétonnées, avec une couche d'accrochage (4) appliquée directement sur la surface (3), une couche de mastic (5) adhérant à la couche d'accrochage (4), sur laquelle sont stratifiées à l'aide d'une résine synthétique, deux couches d'une matière (6) en fibres minérales qui est tissée, travaillée ou tricotée, caractérisé en ce que les deux couches sont reliées l'une à l'autre au moyen de fils (9) de poil ou de peluche, et en ce que les fils de poil ou de peluche sont ancrés dans les deux couches (7,8).

2. Système de revêtement selon la revendication 1, caractérisé en ce que la couche d'accrochage (4) est une résine époxy à deux composants, présentant de préférence une viscosité comprise entre 300 mPas et 1000 mPas.

3. Système de revêtement selon la revendication 1, caractérisé en ce que la couche de mastic (5) est composée d'une résine époxy à deux composants, qui est chargée à l'aide de matériaux de charge, en particulier de matériaux de charge minéraux.

4. Système de revêtement selon la revendication 3, caractérisé en ce que les matériaux de charge sont constitués par du sable de quartz présentant une granulométrie comprise entre 0,1 et 0,3 mm.

5. Système de revêtement selon la revendication 1, caractérisé en ce que la matière en fibres minérales (6) est reliée à la couche de mastic (5) au moyen d'une résine de stratification.

6. Système de revêtement selon la revendication 5, caractérisé en ce que la résine de stratification est une résine époxy, une résine d'ester vinylique dissoute dans du styrène ou une résine de polyester dissoute dans du styrène.

7. Système de revêtement selon la revendication 5, caractérisé en ce que la résine de stratification est pré-accélérée.

8. Système de revêtement selon la revendication 1, caractérisé en ce que la matière en fibres minérales (6) est composée de fibres de verre.

9. Système de revêtement selon la revendication 1, caractérisé en ce que la matière en fibres minérales (6) est un produit tissé qui est similaire à un velours double non coupé.
